(19) Europäisches Patentamt
European Patent Office
Office européen des brevets

(11) Publication number: 0 086 046 B1

(12) **EUROPEAN PATENT SPECIFICATION**

(45) Date of publication of patent specification: **24.06.87**

(51) Int. Cl.[4]: **B 01 J 31/24**, B 01 J 31/18, C 07 C 103/19

(21) Application number: **83300254.6**

(22) Date of filing: **19.01.83**

(54) **A process for the preparation of alpha-6-DEOXYTETRACYCLINES.**

(30) Priority: **19.01.82 PT 74303**
**30.12.82 PT 76061**

(43) Date of publication of application:
**17.08.83 Bulletin 83/33**

(45) Publication of the grant of the patent:
**24.06.87 Bulletin 87/26**

(84) Designated Contracting States:
**BE CH DE FR GB IT LI NL**

(56) References cited:
**FR-A-2 216 268**
**FR-A-2 289 474**
**GB-A-1 360 006**
**US-A-3 463 830**
**US-A-3 954 862**
**US-A-3 956 177**
**US-A-3 962 131**
**US-A-4 207 258**

(73) Proprietor: **PLURICHEMIE ANSTALT**
**P.O. Box 34722**
**Vaduz (LI)**

(72) Inventor: **Page, Philip Ronald**
**Rua dos Girassois Lote38A Bairro de Santo Antonio**
**Sao Domingos de Rana P-2775 Parede (PT)**
Inventor: **Villax, Ivan**
**3, Travessa do Ferreiro**
**P-1200 Lisbon (PT)**

(74) Representative: **Wain, Christopher Paul et al**
**A.A. THORNTON & CO. Northumberland House**
**303-306 High Holborn**
**London WC1V 7LE (GB)**

(56) References cited:
**JOURNAL OF THE CHEMICAL SOCIETY, 1966, pages 1711-1732 J.A. OSBORN et al.: "The preparation and properties of tris(triphenylphosphine)halogenor hodium (I) and some reactions thereof including catalytic homogeneous hydrogenation of olefins and acetylenes and their derivatives**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 086 046 B1

**Description**

The present invention relates to the preparation, by homogeneous hydrogenation, of α-6-deoxytetracyclines from 6-deoxy-6-demethyl-6-methylenetetracyclines, especially in the stereospecific hydrogenation of the 6-methylene group of 6-deoxy-6-demethyl-6-methylene-5-hydroxytetracycline and of its 11a-halo analogue to give α-6-deoxy-5-hydroxytetracycline (doxycycline; α-6-deoxyoxytetracycline).

Homogeneous catalysts as a general group have been known for a considerable time, starting with soluble metal salts in the early part of this century. The use of d-block transition metals with organic donor ligands, exemplified for example by Wilkinson et al. in Journal of the Chemical Society 1966, 1711-1732, paved the way to catalysts with highly specific catalytic behaviour. An aim of the present invention was to find catalysts for the hydrogenation of the aforementioned exocyclic 6-methylene group, which would allow the use of minimal quantities of catalyst, whilst giving high yields and high optical purities of α-6-deoxytetracyclines, which are well-known anti-bacterial agents.

The prior art relating to this hydrogenation is extensive, so only the salient parts of the various published procedures will be herein reviewed. One point which is similar to all of them is the major problem of co-production of β-6-epimers. The presence of these epimers, which are effectively devoid of clinical utility, requires the use of extensive purification techniques in order that a pure product can eventually be obtained.

Prior to 1972, only the use of heterogeneous catalysts was taught, these being non-stereospecific and giving yields of between 8 and 64%. Thus, the α-epimer of 6-deoxy-5-hydroxytetracycline was first isolated in pure form and described in U.S. Patent 3,200,149, applied for in 1960. 5%-Rhodium-on-carbon was used, furnishing a 24% weight/weight yield, contaminated with an equal amount of β-6-deoxy-5-hydroxytetracycline. The required epimer was purified by countercurrent distribution. U.S. Patent 3,444,198 showed that the use of 5% palladium-on-carbon, in the presence of a catalyst poison, such as quinoline-sulphur, could improve the ratio of the α-epimer to the β-epimer. However, the yield was still low and the requirement for extensive purification still remained.

British Patent 1,360,006 then showed that the use of a mixture of hydrazine and palladium-on-carbon gave improved specificity for the required α-epimer, but in this case the major impurity was the 6-deoxy-6-demethyl-6-methylene-5-hydroxytetracycline, when the process was started from the 11a-chloro intermediate. A further example was provided in West German Patent 2,136,621, wherein the use of Raney Nickel was described. In addition to these references, various other parents appeared such as U.S. Patents 3,397,231, 3,795,707 and 4,061,676, which were solely aimed at new purification techniques. These processes were often long and involved, and demonstrated clearly the poor quality of the products from the then known processes.

The first use of a homogeneous catalyst was described in U.S. Patent 4,207,258 (Italian priority 1972), wherein the hydrogenation of 6-deoxy-6-demethyl-6-methylenetetracyclines was carred out in the presence of a complex of rhodium with tertiary phosphine, arsine or stibine ligands. The examples described both higher yields and improved stereospecificity, although the content of the β-epimer was still quoted at about 5%. Additionally, the typical amount of catalyst was 0.22 parts per part of the starting tetracycline, or 0.024 parts of rhodium metal per part of the starting tetracycline.

U.S. Patent 3,962,331 (Italian priority 1973) extended the above process to the simultaneous reductive dehalogenation and hydrogenation of the exocyclic methylene group of an 11a-halo-6-deoxy-6-demethyl-6-methylenetetracycline. However, the β-epimer was still produced in about 5%. In the case of 11a-chloro-6-deoxy-6-demethyl-6-methylene-5-hydroxytetracycline p-toluenesulphonate, about 0.003 parts of rhodium were used per part of starting material.

French Patent 2,216,268 (U.S. priority 1973) disclosed the use of the same catalyst and the hplc analysis of the reaction mixture of a typical example showed the ratio of the α-epimer to the β-epimer to be 92:8. In this example, the necessary catalyst contained 0.13 parts of rhodium per part of the 6-deoxy-6-demethyl-6-methylene-5-hydroxytetracycline to be hydrogenated.

U.S. Patent 3,954,862 (first filed in 1973) described the hydrogenation of 6-deoxy-6-demethyl-6-methylenetetracycline in the presence of rhodium metal, a tertiary phosphine and a promoter selected from strong acid or stannous chloride. Thus, this process prepared the catalyst, described in U.S. Patent 4,207,258, in the reaction mixture, starting from rhodium metal and strong acid or stannous chloride, instead of the equivalent rhodium chloride. Typical examples showed that formation of the unrequired β-epimer still occurred in quantities from 1% to 5%. Normally, 0.1 to 0.01 parts of rhodium were employed per part of the 6-deoxy-6-demethyl-6-methylene-5-hydroxytetracycline. The use of 0.019 parts gave a product still containing 45% of starting material, and even addition of a further 0.019 parts and continuation of the hydrogenation still left 15% starting material in the product.

U.S. Patent 3,907,890 (filed in 1974) described the use of cobalt octacarbonyl, triphenylphosphine and hydrochloric acid. Whilst this is not a hydrogenation, since no hydrogen is added to the reaction mixture "per se", the reaction gave varying amounts of the β-epimer, ranging from 17% to about 0.5%. Additionally, the stoichiometric yield varied between 54% and 72%. Overall, it can be seen that this process produces considerable variances both in yield and purity.

U.S. Patent 4,001,321 used as catalyst dicarboxylato(triphenylphosphine)rhodium (II), or dicarboxylato(substituted triphenylphosphine)rhodium (II), typically in about 0.01 parts of rhodium per part

of 6-deoxy-6-demethyl-6-methylene-5-hydroxytetracycline. Again, the product was contaminated by 2—3% of the β-epimer.

Finally, U.S. Patent 3,962,131 (filed in 1975) used an unknown catalyst prepared by the action of one mole of rhodium trichloride with two moles of sodium acetate, and finally with triphenylphosphine. Unfortunately, there was no rhodium analysis on the obtained catalyst, but calculations would indicate, based on the assumption that the catalyst contained all of the rhodium used initially, about 0.003 parts of rhodium were required for each part of the 6-deoxy-6-demethyl-6-methylene-5-hydroxytetracycline. Again unfortunately, no chromatographic analysis was included, so the content of the β-epimer is unknown.

Thus, it can easily be seen that there is a current need for a process of homogeneous catalytic hydrogenation which fulfills the following conditions:

1. It uses less than 0.001 parts of catalyst per part of the tetracycline to be hydrogenated;
2. It produces a good yield of the hydrogenated product;
3. It does not produce, or allows only negligible production of the unrequired α-epimer.

We have now devised some catalysts to meet these requirements.

According to the invention, there is provided a process for preparing an α-6-deoxy-tetracycline from a 6-deoxy-6-demethyl-6-methylene-tetracycline acid addition salt, or from an 11a-chloro-6-deoxy-6-demethyl-6-methylenetetracycline or a salt thereof, by homogeneous catalytic hydrogenation in the presence of triphenylphosphine of which at least some may be part of the catalyst, the α-6-deoxy-tetracycline subsequently being isolated from the reaction mixture, preferably in the form of the crystalline p-toluenesulphonate, characterised in that the catalyst is the product of reaction between a rhodium salt or complex and a hydrazine or a salt thereof.

U.S. Patent 3,956,177 describes compositions useful as hydroformylation catalysts, prepared by contacting an organorhodium halide with a hydrazine and a phosphorus-containing adjuvant, to form an intimate mixture thereof. The catalysts are not apparently compounds and are not described as useful for hydrogenation purposes.

The catalysts useful in the present invention can be prepared by various pathways. Thus, a complex of rhodium can be reacted with a hydrazine or salt thereof, or a rhodium salt can be reacted with a hydrazine, or a salt thereof.

In the first case, the rhodium complex is preferably one in which the rhodium is complexed with triphenylphosphine. A preferred rhodium complex is tris(triphenylphosphine)chlororhodium (I).

The hydrazine to be reacted with the complex preferably has the general structure $R_1'R_2'N\ .\ NR_3'R_4'$ wherein $R_1'$ is a lower alkyl, phenyl or benzenesulphonyl group or hydrogen and $R_2'$, $R_3'$ and $R_4'$ are lower alkyl groups or hydrogen with the proviso that when $R_1'$ is a phenyl or benzenesulphonyl group, then $R_2'$, $R_3'$ and $R_4'$ can only be hydrogen. A preferred hydrazine is hydrazine itself, preferably in the form of the hydrate.

The hydrazine is normally present in an excess based upon the number of moles of rhodium present, this excess being understood to mean from slightly above equimolar to a hundred-fold molar excess. It is preferred that 3 moles of the hydrazine are used for each mole of rhodium, although a 50 mole/mole excess gives equally useful catalysts.

The preparation can be carried out in the presence of triphenylphosphine. The addition of this compound to the reaction finds its basis in the teachings of U.S. Patent 3,463,830, wherein complexes of palladium and platinum with tertiary phosphines are reduced in the presence of hydrazine and excess tertiary phosphine to the zero-valent palladium and platinum tertiary phosphine complexes. It is also stated in the same patent that omission of the excess tertiary phosphine from the reaction leads to the preparation of co-ordinatively unsaturated zero-valent palladium and platinum tertiary phosphine complexes. Thus, the preparation of the catalysts useful in the present invention, can be either in the presence or absence of added triphenylphosphine, which can be present in up to 20 moles per mole of rhodium present in the reaction. Typically, between 3 and 15 moles/mole are preferred.

The reaction medium can be chosen from a lower alcohol, which is also intended to encompass glycols, and cyclic ethers. Typical of the preferred solvents are methanol, ethanol, propanol, propan-2-ol, butanol, 2-methylpropan-2-ol, ethan-1,2-diol and tetrahydrofuran, with methanol, ethanol, propan-2-ol and butanol being especially preferred.

The reaction is carried out between 0°C and 100°C, with the preferred temperature being between room temperature and about 90°C. Typically, the reaction can be carried out at room temperature, although as would be expected, it proceeds faster with elevated temperatures. The reaction can be followed visually in that the initial colour of the reaction mixture is purple and that of the catalysts useful in the present invention is usually between yellow and brown, including orange. Thus, the time for the reaction, which is dependant on the temperature, can be judged quite easily. It is typically between a few minutes and two hours. Whilst the catalysts can be prepared as described above, the use of an inert atmosphere, such as nitrogen, is preferred.

When the reaction is judged complete, the catalysts can be obtained by conventional means well known to those skilled in the art. Normally, the addition of a miscible organic solvent, in which the catalysts are insoluble, and with which the catalysts do not react, followed by filtration and washing with the same organic solvent is the method of choice. The preferred organic solvent is di-isopropyl ether. It might be found in some instances, that a catalyst is insoluble in the reaction mixture, in which case it can be obtained

by simple filtration and washing. The catalysts are then dried at room temperature.

A further feature of this method of preparation is that the catalysts can be prepared and used without actually isolating them. Thus, one mixes the rhodium-triphenylphosphine complex with a hydrazine in a suitable solvent, eventually with the presence of triphenylphosphine, and stirs at the required temperature until the colour change indicates complete reaction. Then, the 6-deoxy-6-demethyl-6-methylene-5-hydroxytetracycline or the 11a-halo analogue is added, together with more solvent and more triphenylphosphine as required. The mixture is then hydrogenated in the normal fashion to obtain the required product.

The second method of preparation of the catalysts is from a rhodium salt, a hydrazine, or a salt thereof, and triphenylphosphine in a suitable solvent mixture. The rhodium salt is preferably rhodium trichloride in the form of its trihydrate. The hydrazine has a general formula of $R_1'R_2'N.\ NR_3'R_4'$, wherein the $R_1'$, $R_2'$, $R_3'$ and $R_4'$ are as previously defined, and is preferably hydrazine itself, phenylhydrazine, benzenesulphonylhydrazine, N,N-dimethylhydrazine, N,N'-dimethylhydrazine or tetramethylhydrazine, or a salt thereof. Particularly preferred are hydrazine hydrate and hydrazine dihydrochloride.

The hydrazine is generally in an excess based upon the quantity of rhodium in the reaction, typically but not exclusively about 10 moles/mole of rhodium.

Typically, the triphenylphosphine is present in an excess with respect to the molar quantity of rhodium present, the range of between about 1 and about 2.5 moles/mole being particularly preferred.

The reaction medium is a mixture of water and an organic solvent, which is inert in the reaction. In this instance, "inert in the reaction" means that it does not chemically react with the catalyst produced. This excludes substitution of a co-ordinatively bound ligand, which as is well known to those skilled in the art, is extremely facile with this type of molecule. Thus, the organic solvent can be chosen from a lower di-alkyl ketone, such as acetone and butan-2-one, a lower alcohol, which also covers glycols, such as methanol, ethanol, propanol, propan-2-ol, butanol, 2-methyl-propan-2-ol and ethan-1,2-diol, an ether, such as tetrahydrofuran and dioxane, an organic nitrile, such as acetonitrile or a lower dialkyl amide, such as dimethylformamide. An especially preferred organic solvent is acetone.

The reaction is carried out between 0°C and the reflux temperature of the medium, with between 50°C and 80°C being the optimal range. Below 0°C the reaction is too slow to be of practical interest. The reaction time is typically between about 1 and about 5 hours, although the usual reaction time is about 3 hours. Whilst the catalysts can be prepared as described above, the use of an inert atmosphere, such as nitrogen, is preferred.

In this process, the catalyst is usually insoluble in the reaction mixture, and so can be obtained by simple conventional means, such as filtration. It might be found in some instances that a catalyst of the present invention is soluble in the reaction mixture, when addition of a miscible solvent, in which the catalyst is insoluble would be advantageous. The solvent should not react the catalyst so formed, a preferred example being di-isopropyl ether. After filtration, the catalyst is usually washed with an organic solvent in which it is insoluble, di-ethyl ether being preferred, followed by drying at room temperature.

A further method is that a rhodium salt, such as rhodium trichloride trihydrate can be reacted with a hydrazine, in the absence of any added triphenylphosphine. The hydrazine, which is preferably hydrazine itself, in the form of its hydrate, is present in excess, typically of the order of 10 moles/mole of rhodium present. As for the previous method of preparation, the reaction medium is water plus an organic solvent, which can be chosen from one of the following: a lower di-alkyl ketone; a lower alcohol; an ether; an organic nitrile; or a lower di-alkyl amide, as was discussed previously. The preferred solvent is acetone.

Again, the optimal temperature range is from 50°C to 80°C, and the time between about 1 and about 5 hours, with about 3 hours being preferred. The catalytic compounds can be obtained in a manner similar to those described before, such as filtration in the event that the compound is insoluble in the reaction mixture, or by addition of an organic solvent, in which the catalyst is insoluble, followed by filtration. Obviously, the solvent should not react with the product in any way, a preferred solvent being di-isopropyl ether.

It will be seen that these compounds require the presence of triphenylphosphine in order to be catalysts in the hydrogenation reaction.

Naturally, any amount of rhodium eventually remaining in the mother liquors of the preparation of any of the above catalysts can easily be recovered, practically without loss, by conventional methods and recycled.

The structures of these catalysts have not been established by X-ray crystallography, due to failure to obtain crystals of sufficient size. They have, however, been analysed by other techniques.

A major point of divergence between the catalysts used in the present invention and those of the prior art is provided by infra-red spectrometry. The Wilkinson catalyst, tris(triphenylphosphine)chlororhodium (I), shows peaks at the following positions:

5.80(s); 6.00(s); 6.76(m); 7.00(m); 7.65(m);
8.45(m); 8.65(m); 8.94(m); 9.20(m); 9.73(ms);
10.20(s); 13.50(1, b); 14.40(1, b)µm

where s, m, 1 stand for small, medium and large peaks, respectively, and b stands for broad.

The catalysts used in the present invention have broad medium peaks at about 6.3 µm. An inspection of comparative spectra shows that this peak is not present in the Wilkinson catalyst.

The elemental analyses of the catalysts did show a dramatic difference as would be expected. Thus, the nitrogen content, depending on the actual catalyst, varied from 2% to above 6%, the majority having about 4%. Extreme care had to be taken with these analyses due to the fact that some of the catalysts were sensitive to oxygen, this being evidenced by colour changes toward brown. In general, the rhodium contents were of the order of 10% to 18%, most usually about 14%.

From the various results obtained it was deduced that the catalysts have the general formula, when prepared from a chlorine-containing starting material:

$$(PPh_3)_x\ (R_1'R_2'N\ .\ NR_3'R_4')_y\ Rh_zCl_z$$

where the presence of z atoms of rhodium in each molecule covers the possible formation of di- or trimeric compounds.

However, this postulated general formula has not yet been confirmed by X-ray crystallography, so eventually one could reach the conclusion that it is erroneous. The present invention relates to the use of products obtained by the processes herein described and not to a particular nomenclature or a possible structure.

The present invention concerns the preparation of α-6-deoxy-tetracyclines by hydrogenating a compound of the formula:

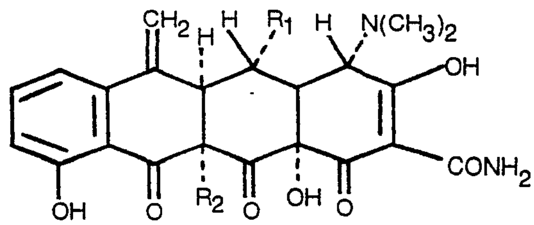

in which $R_1$ is hydrogen or hydroxy group, $R_2$ is hydrogen or chlorine, in a reaction inert solvent, in the presence of a triphenylphosphine-hydrazinorhodium complex as catalyst, prepared as previously described.

The pressure is not critical; it can be from atmospheric pressure upwards, however the preferred pressure range is from 4 to 10 kg/cm$^2$. The hydrogenation is carried out preferably at a temperature range from about 60°C to 90°C. At lower temperatures, the reaction is too slow and above 100°C decomposition takes place.

The reaction time is dependent on the amount of catalyst used and the hydrogenation conditions. A satisfactory reaction time is from about 3 to 10 hours, but satisfactory results and high yields can be obtained even after 16 hours of hydrogenation.

The starting material is added in the form of an acid addition salt, such as hydrochloride, p-toluenesulphonate, but other acid addition salts can be used provided that the acid is not a catalyst poison.

The 6-methylene-5-oxytetracycline (methacycline; MOT) can be prepared by any of the known processes but should not contain impurities which may act as catalyst poisons.

The hydrogenation is stopped when the rate of consumption of hydrogen drops drastically. The reaction mixture, once the hydrogenation is completed, containing nearly exclusively the α-epimer, does not contain unreacted starting material or only traces; the amount of by-products or degradation products is negligible and the β-epimer is less than 1%, usually it is around 0.1%.

It has been observed that the addition of a small amount, in the order of 0.01 to 0.06 moles of triphenylphosphine per mole of substrate to the reaction mixture, prior to starting hydrogenation, will accelerate the rate of hydrogen consumption, facilitate completion of the reaction and increase the yield toward 100%. The amount of the triphenylphosphine is critical and an excess above the amount indicated will reduce the yield. The optimum amount of additional triphenylphosphine can easily be determined for a given batch of catalyst by running a few experiments.

The purity of the reaction mixture thus obtained is such that the doxycycline can be crystallised directly from said reaction mixture by adding p-toluenesulphonic acid in excess, on condition that the solvent in the reaction medium is a non-solvent for the p-toluenesulphonate salt of doxycycline thus formed; such a solvent is preferably methanol. The purity so obtained is superior to 99% calculated on the dry basis.

The doxycycline p-toluenesulphonate can subsequently be transformed directly into the hydrochloride hemiethanolate hemihydrate by conventional processes with a yield near to stoichiometric.

In the present invention, the amount of rhodium necessary to achieve complete hydrogenation is much less than the amount used in the prior art processes.

Table I compares the amount of catalyst, yields and purity of the best examples of prior art processes with those of the present invention.

This table shows that the present invention not only surpasses in yield and purity the prior art processes but also the amount of rhodium necessary to hydrogenate a given amount of 6-deoxy-6-demethyl-6-methylene-oxytetracycline is reduced by 4 to 1000 times in relation to the prior art teaching. As

rhodium is an extremely expensive noble metal, this reduction represents an important unexpected improvement, which, together with the nearly stoichiometric yield, results in a considerable reduction of manufacturing costs.

Furthermore, it has been found that the present invention is also applicable to transform 11a-halo-6-deoxy-6-demethyl-6-methylenetetracyclines into α-6-deoxytetracyclines in one reaction by dehalogenating at 11a- and simultaneously reducing the 6-methylene group. The yields and purity are very high and the results obtained demonstrate the considerable improvement over the prior art processes.

Chloromethacycline, prepared according to U.S. Patent 3,849,491, is an eminently suitable starting material in the present invention.

TABLE I

| Patent No. | Example | Amount of rhodium used per kg 6-methylene-oxytc. HCl | Stoichio-metric yield of isolated product % | Content as: | | | Purity of isolated product % |
|---|---|---|---|---|---|---|---|
| | | | | α-6% | β-6% | Starting material % | |
| U.S. Patent 4,207,258 | 2 | 19540 mg | 75.0 | N.S. | N.S. | N.S. | 99.3[(2)] |
| French Patent 2,216,268 | 3 | 21252 mg | 90.6 | N.S. | N.S. | N.S. | N.S. |
| | 5 | 2125 mg | 89.2 | N.S. | 0.6 | 0 | N.S. |
| | 9[(5)] | 556 mg | 78.5 | 78.4 | 0.8 | 5.2 | 78.4 |
| U.S. Patent 3,954,862 | 3 | 1962 mg | 80.0 | 81.0* | 1.6* | N.S. | N.S. |
| | 8 | 19459 mg | N.I. | 82.0* | 2.0* | 16.0 | N.I. |
| | 8 | 2 × 19459 mg | N.I. | 95.0 | 2.0 | 0[(1)] | N.I. |
| U.S. Patent 4,001,321 | 1 | 9369 mg | 95.0 | 93.0 | 2.0—3.0* | N.S. | 93.0 |
| U.S. Patent 3,962,131 | 2 | Less than 3332.4 mg[(3)] | 98.8 | N.S. | N.S. | N.S. | 99.7[(2)] |
| U.S. Patent 3,907,890 | 5 | 0[(4)] | 75.2 | 98.0 | 2.0 | 0 | 98.0 |
| Present invention | 2 | 344.5 mg | 90.0 | 99.5 | 0.45 | Traces | 99.5 |
| | 8B | 620.6 mg | 99.1 | 99.89 | 0 | 0 | 99.89 |

* — values in the reaction mixture.
N.S. — not stated.
N.I. — not isolated.
(1) — plus 3% of unknown substance.
(2) — by U.V. method.
(3) — Rh content not stated; possible limit calculated from Example 1.
(4) — it does not use Rh but cobalt carbonyl.
(5) — combined first and second fractions.

TABLE II

| Patent No. | Example | Amount of rhodium used per kg 11a-chloro MOT base | Stoichio-metric yield of isolated product% | Content as: | | | Purity of isolated product % |
|---|---|---|---|---|---|---|---|
| | | | | α-6% | β-6% | Starting material % | |
| U.S. Patent 3,962,331 | 1 | 4889 mg | 70.1 | 95.0* | 5.0* | Slight traces* | 98.9 |
| French Patent 2216268 | 7 | 21752 mg | 78.8 | N.S. | 1.5—2* | N.S. | 89.0 |
| | 14 | 2159 mg | 81.2 | N.S. | N.S. | N.S. | 88.29 |
| U.S. Patent 3,954,862 | 17 | 2140 mg | 86.7 | 59.9 | 1.33 | 0.8 | 59.9 |
| Present invention | 3A | 346.1 mg | 84.2 | 99.8 | 0 | 0 | 99.8 |
| | 21 | 378.4 mg | 90.7 | 99.6 | 0.3 | 0 | 99.6 |
| | 24 | 224.6 mg | 85.9 | 99.65 | 0 | Traces | 99.65 |

* — values in the reaction mixture.

To perform the reaction, an 11a-halo-6-deoxy-6-demethyl-6-methylenetetracycline, preferably 11a-chloro-6-deoxy-6-demethyl-6-methylene-oxytetracycline p-toluenesulphonate, is suspended in methanol in a conventional low pressure stainless steel hydrogenation apparatus, then a triphenylphosphinehydrazino-rhodium catalyst and an additional amount of triphenylphosphine are added under stirring and hydrogenated subsequently at about 60°C to 90°C at a pressure between 4 and 10 kg/cm$^2$ until the rate of consumption of hydrogen drops drastically. The reaction mixture is cooled down to about 45°C and an excess of p-toluenesulphonic acid is added to the reaction mixture. It is allowed to cool down under stirring so as to reach a temperature of about 0°C after 2 to 3 hours, then it is stirred for an additional hour, filtered and washed with methanol and acetone. The α-6-deoxyoxytetracycline p-toluenesulphonate thus obtained has a purity superior to 99% and does not contain any detectable amount of the β-epimer by circular paper chromatography.

The amount of the additional triphenylphosphine to be added cannot surpass 1 mole/mole of substrate, otherwise the yield will drop drastically.

Table II gives a comparison of the present invention with the state of art in transforming 11a-chloro-6-deoxy-6-demethyl-6-methylene-5-oxytetra-cycline into α-6-deoxyoxytetracycline.

The results clearly show that the unexpected superiority of the triphenylphosphine-hydrazino-rhodium complexes as hydrogenation catalysts not only concerning yields and purity but also in reducing the amount of rhodium necessary to complete the hydrogenation in relation to the prior art processes.

The following examples serve to illustrate the present invention, without in any way limiting the scope thereof.

Example 1

A) Catalyst: Tris(triphenylphosphine)chlororhodium (I) (3.00 g; 3.24 mmoles) was added to hydrazine hydrate (0.48 ml; 9.88 mmoles) in 95% ethanol (60 ml). The mixture was refluxed for 25 minutes in an atmosphere of nitrogen, during which time the colour changed from purple-red to orange. A solid crystallised on cooling, which was filtered, washed with di-isopropyl ether, and dried to yield 1.40 g. Additional amounts were obtained from the mother liquors by addition of di-isopropyl ether and concentration at low temperature. The infra-red spectrum showed a broad peak at 6.30 μm. Elemental analysis showed the product to contain 16.95% rhodium and 4.25% nitrogen.

B) Hydrogenation: The catalyst obtained according to Example 1A (25 mg) was added in methanol (20 ml) to a stainless steel hydrogenation apparatus under magnetic stirring, which contained 6-deoxy-6-demethyl-6-methylene-5-hydroxytetracycline hydrochloride (MOT.HCl; 7.38 g; 15.41 mmoles) and triphenylphosphine (0.1 g; 0.38 mmoles) in methanol (40 ml). After purging with nitrogen, hydrogen was added to a pressure of 8 kg/cm$^2$, and the mixture was heated to 89°C. After 5h30m the consumption dropped, and 1 hour later it was cooled down. The reaction mixture was filtered through a G4 glass-filter, then p-toluenesulphonic acid (3.30 g; 19.16 mmoles) was added to the filtrate with stirring. The α-6-deoxyoxytetracycline p-toluenesulphonate thus formed was filtered, washed with acetone and dried. The product, which weighed 9.65 g, had the following analytical values: Humidity 3.13% by the Karl Fischer method, yield 98.4% and purity 99.8% on an anhydrous basis. No β-epimer or starting material were detectable by circular paper chromatography ("Schleicher & Schüll" paper Nr. 2045 B, 265 mm, ref No 381 804; stationary phase: 100 ml 0.1M citric acid and 40 ml 0.2M anhydrous disodium phosphate were mixed to make a buffer with pH 3.5; mobile phase: nitromethane: chloroform: pyridine — 20:10:3).

Example 2

Example 1B was repeated, but 15 mg of the catalyst was added instead of 25 mg. The α-6-deoxytetracycline p-toluenesulphonate weighed 8.57 g. Yield 90%. It contained 0.45% of the β-epimer and traces of starting material.

Example 3

A) The catalyst obtained according to Example 1A (15 mg) was added in methanol (20 ml) to a stainless steel hydrogenator containing 11a-chloro-6-deoxy-6-demethyl-6-methylene-5-hydroxytetracycline p-toluenesulphate (10.0 g; 15.41 mmoles) and triphenylphosphine (4.00 g; 15.25 mmoles) in methanol (40 ml). Then it was flushed with nitrogen and filled with hydrogen to a pressure of 9.2 kg/cm$^2$ at 88°C. After 9h30m, it was cooled down and the reaction mixture was filtered. p-Toluenesulphonic acid (3.30 g; 19.16 mmoles was added to the filtrate and the mixture stirred for 2 hours. The crystals formed were filtered and washed. The α-6-deoxyoxytetracycline p-toluenesulphonate thus obtained weighed 8.0 g, corresponding to a yield of 84.2%. No β-epimer or starting material were detectable in the product by circular paper chromatography.

B) Repetition of Example 3A above with 10 mg of the same catalyst gave a yield of α-6-deoxyoxytetracycline p-toluenesulphonate of 7.82 g or 82.3%.

Example 4

A) Catalyst: The conditions of Example 1A were repeated, except that the reaction mixture was stirred for 90 minutes at room temperature (28°C). The yield of the orange coloured first fraction was 1.63 g. Concentration of the mother liquors under vacuum at low temperature provided a further 1.22 g. The infra-red spectrum showed a broad peak at 6.3 μm.

B) Hydrogenation: A reaction mixture prepared as above (0.50 ml) was used as the catalyst in the hydrogenation procedure described in Example 1B. The isolated α-6-deoxyoxytetracycline p-toluenesulphonate weighed 8.82 g, representing a yield of 92.8%. No β-epimer or starting material were present by circular paper chromatography.

The mother liquors were then diluted with an equal volume of water and sulphosalicylic acid (4.0 g; 18.33 mmoles) was added. An additional 0.83 g of doxycycline sulphosalicylate was thus obtained, containing about 10% of the β-epimer.

## Example 5

A) Catalyst: The conditions of Example 4A were repeated, using methanol as the solvent, and a reaction time of 20 minutes. The filtered solid was light brown, with the first fraction weighing 1.40 g. Addition of di-isopropyl ether and concentration yielded two further fractions totalling 1.59 g. A broad peak at 6.30 μm was present in the infra-red spectrum. Elemental analysis showed the first fraction to contain 15.53% rhodium and 2.52% nitrogen.

B) Hydrogenation: A reaction mixture as above (0.5 ml) was used as the catalyst in the hydrogenation procedure given in Example 3A. The doxycycline p-toluenesulphonate so obtained, weighed 8.27 g, representing a yield of 87.1%. The specific rotation in methanol containing 1% hydrochloric acid was −77.5°.

## Example 6

A) Catalyst: The conditions of Example 4A were repeated, using propan-2-ol as the solvent. In this case, the mixture was stirred for 45 minutes, before the orange product was filtered off. The yield of the first fraction was 64% weight/weight, with a further 30% weight/weight obtained by adding di-isopropyl ether, concentrating and filtering. The infra-red spectrum showed the presence of a broad peak at 6.30 μm.

B) Hydrogenation: The hydrogenation procedure as described in Example 1B was repeated with the catalyst obtained hereinabove (25 mg). The α-6-deoxyoxytetracycline isolated as p-toluenesulphonate weighed 8.83 g and had the following analytical values: Humidity 0.11% by Karl Fischer, yield 92.82% and purity 99.9%, both on an anhydrous basis.

## Example 7

To 6-deoxy-6-demethyl-6-methylene-5-hydroxytetracycline hydrochloride (7.38 g; 15.41 mmoles) in methanol (40 ml) in a stainless steel hydrogenator was added the catalyst obtained in Example 6A. (25 mg) in methanol (20 ml). The hydrogenation and isolation were carried out as described in Example 1B.

The α-6-deoxyoxytetracycline p-toluenesulphonate thus obtained weighed 8.17 g and had the following analytical values: Humidity 2.18% by Karl Fischer, yield 84.1% and purity 99.2%, both on an anhydrous basis.

## Example 8

A) Catalyst: The use of n-butanol with the conditions of Example 4A, and a reaction time of 20 minutes, gave an orange product weighing 1.43 g. A second fraction was obtained in the normal fashion. The elemental analysis showed a rhodium content of 18.32% and a nitrogen content of 6.21%.

B) Hydrogenation: The catalyst obtained hereinabove (25 mg) in methanol (20 ml) was added to a stainless steel hydrogenator containing 6-deoxy-6-demethyl-6-methylene-5-hydroxytetracycline hydrochloride (7.38 g; 15.41 mmoles) and triphenylphosphine (0.25 g; 0.95 mmoles) in methanol (40 ml). The hydrogenation and isolation were carried out as indicated in Example 1B. The α-6-deoxooxytetracycline p-toluenesulphonate thus obtained weighed 9.95 g and had the following analytical values: Loss on drying 5.32%, yield 99.14% and purity 99.89%, both on an anhydrous basis. No β-epimer or starting material were detectable by circular paper chromatography.

## Example 9

A mixture of tris(triphenylphosphine)chlororhodium (I) (1.00 g; 1.08 mmoles) and hydrazine hydrate (2.50 ml; 51.4 mmoles) in n-butanol (40 ml) was heated for 25 minutes at 90°C. Addition of di-isopropyl ether to the cooled reaction mixture gave 0.25 g of a yellow solid. Further fractions can be obtained by addition of more di-isopropyl ether.

## Example 10

Tris(triphenylphosphine)chlororhodium (I) (1.00 g; 1.08 mmoles) and hydrazine hydrate (0.16 ml; 3.29 mmoles) were refluxed together in ethanol (20 ml) for 20 minutes. The colour changed from red to yellow. At this point, triphenylphosphine (3.00 g; 11.44 mmoles) was added and the reflux continued for a further 20 minutes. After cooling to room temperature, the brown product was filtered off. The infra-red spectrum of this product showed a broad band at 6.30 μm.

Example 11

A) Catalyst: Phenylhydrazine (0.32 ml; 3.25 mmoles) was heated with tris(triphenylphosphine)-chlororhodium (I) (1.00 g; 1.08 mmoles) in acetonitrile (20 ml) at 65°C for 25 minutes in a nitrogen atmosphere. THe solution was cooled, diluted with di-isopropyl ether and the beige solid collected by filtration. The yield was 25% weight/weight, with the mother liquors containing further product. Again the infra-red spectrum had a broad peak at 6.30 μm.

B) Hydrogenation: Example 1B was repeated using the catalyst obtained in 11A above (25 mg). The α-6-deoxyoxytetracycline p-toluenesulphonate thus obtained weighed 8.33 g, corresponding to a yield of 87.6%. It did not contain any starting material or β-epimer by circular paper chromatography.

Example 12

A) Catalyst: Rhodium trichloride trihydrate (1.00 g; 3.80 mmoles) was dissolved by heating in water (5.0 ml) at 70°C for 1 hour. Under a nitrogen atmosphere, a solution of triphenylphosphine (1.95 g; 7.43 mmoles) in acetone (25.0 ml) was added over a period of 20 minutes. After stirring for a further 10 minutes, hydrazine hydrate (1.90 ml; 39.09 mmoles) was added and the mixture refluxed for 3 hours, then stirred at 45°C for 1 hour. The crystalline solid was filtered off, washed with a little acetone and finally di-ethyl ether, to yield 1.05 g of an orange solid. The infra-red spectrum exhibited a broad peak at 6.30 μm, and the elemental analysis showed the presence of 12.43% rhodium and 2.61% nitrogen.

B) Hydrogenation: The catalyst obtained hereinabove (17 mg) in methanol (13.5 ml) was added to a stainless steel hydrogenator containing 6-deoxy-6-demethyl-6-methylene-5-hydroxytetracycline hydrochloride (5.00 g; 10.44 mmoles) in methanol (27 ml). It was hydrogenated for 6h30m at 88°C at a pressure between 8 and 9.2 kg/cm. p-Toluenesulphonic acid (2.23 g; 12.95 mmoles) was added to the filtered reaction mixture and stirred for 2 hours. The crystals thus obtained were then filtered, washed with acetone and dried. The product weighed 5.4 g, corresponding to a yield of 83.9%. It contained slight traces of the β-epimer by circular paper chromatography. The mother liquors were then diluted with an equal volume of water and sulphosalicyclic acid (4.0 g; 18.33 mmoles) was added. An additional 0.47 g of the sulphosalicylate of doxycycline was obtained, containing about 8% of the β-epimer and about 2% of decomposition product.

Example 13

Example 12B was repeated but triphenylphosphine (68 mg; 0.26 mmoles) was added to the reaction mixture prior to hydrogenation. The α-6-deoxyoxytetracycline p-toluenesulphonate thus obtained weighed 5.36 g, or 83.3%. It contained traces of the β-epimer. The second crop obtained as sulphosalicylate weighed 0.7 g, and contained about 4% of the β-epimer.

Example 14

Rhodium trichloride trihydrate (0.50 g; 1.90 mmoles) was dissolved in water (2.5 ml) by heating at 70°C for 1 hour. Then, a solution of triphenylphosphine (0.73 g; 2.78 mmoles) in acetone (12.5 ml) was added over 20 minutes, under an atmosphere of nitrogen. The mixture was stirred for 10 minutes, after which hydrazine hydrate (0.95 ml; 19.55 mmoles) was added. The mixture was refluxed for 3 hours and then stirred at 45°C for 1 hour. The yellow product was collected by filtration, washed with a small amount of acetone and then with di-ethyl ether. The yield was 58%.

Example 15

A) Catalyst: Rhodium trichloride trihydrate (0.5 g; 1.90 mmoles) in water (2.5 ml) was heated for 1 hour at 70°C with stirring and the hydrazine hydrate (0.8962 ml; 18.44 mmoles) was added portionwise in acetone (9.24 ml). After refluxing for 3 hours, it was cooled down and the crystals were filtered off.

B) Hydrogenation: The hydrogenation was carried out as described in Example 1B using the catalyst obtained above (25 mg). The α-6-deoxyoxytetracycline p-toluenesulphonate thus obtained weighed 7.96 g, corresponding to a yield of 83.8%. It contained about 1.5% of the β-epimer. The mother liquors were then diluted with an equal volume of water, and sulphosalicyclic acid (4.0 g; 18.33 mmoles) was added. An additional 1.55 g of doxycycline sulphosalicylate was obtained, which contained about 93% of the α-epimer and 7% of the β-epimer.

Example 16

Example 15B was repeated but no triphenylphosphine was added to the hydrogenation reaction mixture. There was no consumption of hydrogen and the 6-deoxy-6-demethyl-6-methylene-5-hydroxy-tetracycline remained unchanged.

Example 17

A) Catalyst: Example 12A was repeated, substituting phenylhydrazine (3.85 ml; 39.1 mmoles) for the hydrazine hydrate. The yellowish orange product weighed 2.10 g, and the infra-red spectrum exhibited a broad peak at 6.30 μm.

B) Hydrogenation: Repetition of Example 1B using the catalyst obtained above (25 mg) gave a yield of 8.50 g of α-6-deoxyoxytetracycline p-toluenesulphonate, corresponding to a yield of 89.4%.

Example 18

A) Catalyst: Rhodium trichloride trihydrate (0.50 g; 1.90 mmoles) was dissolved in water (2.5 ml) by heating at 70°C for 1 hour, after which a solution of triphenylphosphine (0.98 g; 3.74 mmoles) in butan-2-one (12.5 ml) was added over 20 minutes. The mixture was stirred for 10 minutes in an atmosphere of nitrogen. Benzenesulphonylhydrazine (3.37 g; 19.57 mmoles) was added, and the mixture stirred at 67°C for 3 hours and 45°C for 1 hour, under a nitrogen atmosphere. Filtration of the cooled reaction mixture yielded 0.93 g of an orange product. The infra-red spectrum exhibited a peak at 6.30 μm.

B) Hydrogenation: The above catalyst (25 mg) was used for repeating Example 1B. The α-6-deoxyoxytetracycline p-toluenesulphonate thus obtained weighed 8.57 g, representing a yield of 90%. No β-epimer or starting material were detectable by circular paper chromatography.

C) Hydrogenation: The above obtained catalyst (25 mg) in methanol (20 ml) was added to a stainless steel hydrogenator containing 11a-chloro-6-deoxy-6-demethyl-6-methylene-5-hydroxytetracycline p-toluenesulphonate (10.0 g; 15.41 mmoles) and triphenylphosphine (4.00 g; 15.25 mmoles) in methanol (40 ml). It was flushed with nitrogen, and filled with hydrogen to a pressure of 9 kg/cm$^2$ at 88°C. After 6h30m, the hydrogenator was cooled down and the reaction mixture was filtered. p-Toluenesulphonic acid (3.3 g; 19.16 mmoles) was added to the filtrate and stirred for 2 hours. The crystals were filtered, washed with acetone and dried. The α-6-deoxyoxytetracycline p-toluenesulphonate thus obtained weighed 8.27 g, representing a yield of 87.0%. No β-epimer or starting material were detectable by circular paper chromatography.

Example 19

Rhodium trichloride trihydrate (0.50 g; 1.90 mmoles) was dissolved in water (2.5 ml) by heating at 70°C for 1 hour. A solution of triphenylphosphine (0.975 g; 3.72 mmoles) and hydrazine di-hydrochloride (2.05 g; 19.53 mmoles) in acetone (12.5 ml) was added during 20 minutes, under an atmosphere of nitrogen. After stirring for 10 minutes, the mixture was refluxed for 3 hours. On cooling, a cream coloured product crystallised. After filtration, washing with a small amount of acetone and finally with di-ethyl ether, a yield of 1.05 g was obtained.

Example 20

Rhodium trichloride trihydrate (0.50 g; 1.90 mmoles) was dissolved in water (2.5 ml) by heating at 70°C for 1 hour. A solution of triphenylphosphine (0.975 g; 3.72 mmoles) in methanol (12.5 ml) was added under a nitrogen atmosphere during 20 minutes. After 10 minutes stirring, hydrazine hydrate (0.95 ml; 19.55 mmoles) was added, and the mixture refluxed under nitrogen for 3 hours. On cooling, a solid crystallised. It was collected by filtration, washed with a small amount of methanol and finally with diethyl ether. The orange solid weighed 0.57 g.

Example 21

A) Catalyst: Hydrazine hydrate (8 μl; 0.16 mmoles) was added to a supension of tris(triphenylphosphine)chlororhodium (I) (50 mg; 0.05 mmoles) in methanol (10 ml), and the mixture stirred at room temperature for a few minutes until a change of the colour of the reaction mixture occurred.

B) Hydrogenation: The above catalyst was added without isolation to 11a-chloro-6-deoxy-6-demethyl-6-methylene-5-hydroxytetracycline p-toluenesulphonate (20.0 g; 30.81 mmoles) and triphenylphosphine (8.00 g; 30.50 mmoles) in methanol (105 ml). Subsequently, the above mixture was hydrogenated at a temperature between 87°C and 88.5°C at a pressure of 8 kg/cm$^2$, during 6 hours. The reaction mixture was then cooled down to about 45°C and p-toluenesulphonic acid (6.7 g; 38.91 mmoles); was added under stirring. It was stirred for a further 2 hours and cooled to 0°C. It was then filtered, washed with methanol (2 × 5.5 ml) and acetone (2 × 5.5 ml) and dried. The α-6-deoxyoxytetracycline p-toluenesulphonate thus obtained weighed 17.23 g, corresponding to a yield of 90.7%. The content of the β-epimer was 0.3% and no starting material was present by h.p.l.c. (Column: μBondapak "Waters" CN-ref No. PN 84042 S/N; sovlent: 80% of tetrahydrofuran, 20% of a mixture containing 80% of water, 20% acetic acid in 0.001M EDTA; flow rate: 2.5 ml/min.; detection: U.V. 268 nm; 1.0 AUFS; chart: 5 mm/min.).

Example 22

A) Catalyst: Hydrazine hydrate (0.08 ml; 1.65 mmoles) was added to tris(triphenylphosphine)-chlororhodium (I) (0.5 g; 0.54 mmoles) in propan-2-ol and refluxed for 25 minutes. Then, it was cooled down and filtered. The catalyst thus obtained contained 14.1% rhodium.

B) Hydrogenation: Example 18C was repeated using the catalyst hereinabove obtained (25 mg). The isolated α-6-deoxyoxytetracycline p-toluenesulphonate, weighed 8.02 g, representing a yield of 84.4%. No β-epimer or starting material were detectable by circular paper chromatography.

Example 23

A) Catalyst: Rhodium trichloride trihydrate (0.5 g; 1.90 mmoles) was heated to 70°C for 1 hour in water (2.5 ml) under a nitrogen atmosphere. Then, triphenylphosphine (0.975 g; 3.72 mmoles) was added in butan-2-one (12.5 ml), followed by hydrazine hydrate (0.95 ml; 19.55 mmoles). After refluxing for 3 hours, followed by stirring at 45°C during 1 hour, it was cooled and the crystals filtered, washed and dried.

B) Hydrogenation: Example 18C was repeated using the above catalyst (25 mg), giving 8.04 g of α-6-deoxyoxytetracycline p-toluenesulphonate, corresponding to a yield of 84.6%. No β-epimer and no starting material were detectable by circular paper chromatography.

Example 24

A) Catalyst: A methanolic solution of hydrazine hydrate (0.6 ml of a solution containing 0.394 ml/100 ml) was added under stirring to tris(triphenylphosphine)chlororhodium (I) (15 mg; Rh content 11.0%) in methanol (20 ml). Stirring was continued for a few minutes until a colour change occurred.

B) Hydrogenation: The above reaction mixture of the catalyst was added to a stainless steel hydrogenator containing 11a-chloro-6-deoxy-6-demethyl-6-methylene-5-hydroxytetracycline p-toluenesulphonate (10.0 g; 15.41 mmoles) and triphenylphosphine (4.00 g; 15.25 mmoles) in methanol (40 ml). It was flushed with nitrogen, then hydrogenated at a pressure of 9.2 $kg/cm^2$ at 88°C for 9 hours. It was then cooled down and filtered. Subsequently p-toluenesulphonic acid (3.3 g; 19.16 mmoles) was added and the mixture stirred for 2 hours and filtered. The α-6-deoxyoxytetracycline p-toluenesulphonate thus formed weighed 8.16 g, representing a yield of 85.9%. No β-epimer was detectable and slight traces of starting material were present by circular paper chromatography.

**Claims**

1. A process for preparing an α-6-deoxy-tetracycline from a 6-deoxy-6-demethyl-6-methylene-tetracycline acid addition salt, or from an 11a-chloro-6-deoxy-6-demethyl-6-methylene-tetracycline or a salt thereof, by homogeneous catalytic hydrogenation in the presence of triphenylphosphine of which at least some may be part of the catalyst, the α-6-deoxy-tetracycline subsequently being isolated from the reaction mixture, preferably in the form of the crystalline p-toluenesulphonate, characterised in that the catalyst is the product of reaction between a rhodium salt or complex and a hydrazine or a salt thereof.

2. A process according to claim 1, wherein for each part of substrate to be hydrogenated, the amount of rhodium metal in the catalyst necessary to perform the hydrogenation is less than 0.0007 parts by weight of the substrate to be hydrogenated.

3. A process according to claim 1 or 2, wherein the said complex is of rhodium and triphenylphosphine, and wherein the hydrazine is of the formula $R'_1R'_2N.NR'_3R'_4$, wherein $R'_1$ is a lower alkyl, phenyl or benzensulphonyl group or hydrogen and $R'_2$, $R'_3$ and $R'_4$ are lower alkyl groups or hydrogen, with the proviso that when $R'_1$ is a phenyl or benzenesulphonyl group, $R'_2$, $R'_3$ and $R'_4$ can only be hydrogen, and wherein the reaction of the complex with a hydrazine or a salt thereof is effected in the presence or absence of excess of triphenylphosphine in an organic solvent at a temperature between 0°C and the reflux temperature of the medium, until complete reaction, and then the said catalyst is isolated by the addition of a miscible non-solvent, followed by filtration.

4. A process according to claim 3, wherein the complex which is reacted with the hydrazine is tris(triphenylphosphine)chlororhodium (I).

5. A process according to claim 3, wherein the hydrazine is hydrazine itself, preferably in the form of the monohydrate.

6. A process according to claim 3, 4 or 5, wherein the organic solvent is a lower alcohol, such as methanol, ethanol, propanol, propan-2-ol, butanol, 2-methylpropan-2-ol, or a cyclic ether, such as tetrahydrofuran.

7. A process according to claim 1 or 2, wherein the catalyst is the product of reaction between a rhodium salt and a hydrazine or a salt thereof of the formula $R'_1R'_2N.NR'_3R'_4$, in which $R'_1$, $R'_2$, $R'_3$ and $R'_4$ are as defined in claim 3, in the presence of triphenylphosphine, in a mixture of an organic solvent, which is inert in the reaction, and water, at a temperature of between 20°C and the reflux temperature of the medium for between 1 and 5 hours, after which the said catalyst is obtained by filtration, or addition of a non-solvent, followed by filtration.

8. A process according to claim 7, wherein further triphenylphosphine is added in the catalytic hydrogenation process.

9. A process according to claim 7, wherein for every mole of rhodium, between 1 and 2.5 moles of triphenylphosphine are used in the reaction between the rhodium salt, the hydrazine and the triphenylphosphine.

10. A process according to claim 1 or 2, wherein the catalyst is the product of reaction between a rhodium salt and a hydrazine of the formula $R'_1R'_2N.NR'_3R'_4$, in which $R'_1$, $R'_2$, $R'_3$ and $R'_4$ are as defined in claim 3, in the absence of triphenylphosphine, in a mixture of an organic solvent, which is inert in the reaction, and water, at a temperature of between 20°C and the reflux temperature of the medium for between 1 and 5 hours, after which said catalyst is obtained by filtration, or addition of a non-solvent, followed by filtration, and wherein the homgeneous catalytic hydrogenation is effected in the presence of triphenylphosphine.

11. A process according to claim 7, 8 or 10, wherein the rhodium salt is rhodium trichloride, in the form of the trihydrate.

12. A process according to claim 7, 8 or 10, wherein the hydrazine is hydrazine itself, phenylhydrazine, benzenesulphonylhydrazine, N,N-dimethylhydrazine, N,N'-dimethylhydrazine or tetramethylhydrazine, or a salt thereof.

13. A process according to claim 7, 8 or 10, wherein the hydrazine is present in the reaction in a stoichiometric excess.

14. A process according to claim 7 or 10, wherein the organic solvent is a lower di-alkyl ketone, such as acetone, butan-2-one, a lower alcohol, such as methanol, ethanol, propanol, propan-2-ol, butanol, 2-methylpropan-2-ol, an ether, such as tetrahydrofuran, dioxane, an organic nitrile, such as acetonitrile or a lower di-alkyl amide, such as dimethylformamide.

**Patentansprüche**

1. Verfahren zur Herstellung eines α-6-Desoxy-tetracyclins aus einem 6-Desoxy-6-demethyl-6-methylen-tetracyclin-Säureadditionssalz oder aus einem 11a-Chloro-6-desoxy-6-demethyl-6-methylen-tetracyclin oder einem Salz desselben durch homogene katalytische Hydrierung in Gegenwart von Triphenylphosphin, von dem wenigstens etwas ein Teil des Katalysators sein kann, wobei das α-6-Desoxy-tetracyclin anschließend aus der Reaktionsmischung isoliert wird, vorzugsweise in Form des kristallinen p-Toluolsulfonats, dadurch gekennzeichnet, daß der Katalysator das Reaktionsprodukt zwischen einem Rhodium-Salz oder -Komplex und einem Hydrazin oder einem Salz desselben ist.

2. Verfahren nach Anspruch 1, dadurch gekennzeichnet, daß für jeden Teil des zu hydrierenden Substrats die zur Durchführung der Hydrierung notwendige Menge Rhodium-Metall in dem Katalysator kleiner als 0,0007 Teile, bezogen auf das Gewicht des zu hydrierenden Substrats, ist.

3. Verfahren nach Ansprüchen 1 oder 2, dadurch gekennzeichnet, daß der Komplex ein Komplex aus Rhodium und Triphenylphosphin ist und das Hydrazin ein solches der Formel $R_1'R_2'N.NR_3'R_4'$ ist, in der $R_1'$ eine Niederalkyl-, Phenyl- oder Benzolsulfonyl-Gruppe oder Wasserstoff ist und $R_2'$, $R_3'$ und $R_4'$ Niederalkyl-Gruppen oder Wasserstoff sind, mit der Maßgabe, daß, wenn $R_1'$ eine Phenyl- oder Benzolsulfonyl-Gruppe ist, $R_2'$, $R_3'$ und $R_4'$ nur Wasserstoff sein können, und daß die Reaktion des Komplexes mit einem Hydrazin oder einem Salz desselben in Gegenwart oder Abwesenheit eines Triphenylphosphin-Überschusses in einem organischen Lösungsmittel bei einer Temperatur wischen 0°C und der Rückfluß-Temperatur des Mediums bis zur vollständigen Umsetzung durchgeführt wird und dann der Katalysator durch Zusatz eines mischbaren Nichtlösungsmittels und nachfolgende Filtration isoliert wird.

4. Verfahren nach Anspruch 3, dadurch gekennzeichnet, daß der Komplex, der mit dem Hydrazin umgesetzt wird, Tris(triphenylphosphin)chlororhodium(I) ist.

5. Verfahren nach Anspruch 3, dadurch gekennzeichnet, daß das Hydrazin Hydrazin selbst, vorzugsweise in Form des Monohydrats, ist.

6. Verfahren nach Ansprüchen 3, 4 oder 5, dadurch gekennzeichnet, daß das organische Lösungsmittel ein niederer Alkohol wie Methanol, Ethanol, Propanol, Propan-2-ol, Butanol, 2-Methylpropan-2-ol oder ein cyclischer Ether wie Tetrahydrofuran ist.

7. Verfahren nach Ansprüchen 1 oder 2, dadurch gekennzeichnet, daß der Katalysator das Produkt der zwischen 1 h und 5 h dauernden Reaktion zwischen einem Rhodium-Salz und einem Hydrazin oder einem Salz desselben der Formel $R_1'R_2'N.NR_3'R_4'$, in der $R_1'$, $R_2'$, $R_3'$ und $R_4'$ die in Anspruch 3 angegebenen Bedeutungen haben, in Gegenwart von Triphenylphosphin in einer Mischung aus einem organischen Lösungsmittel, das in der Reaktion inert ist, und Wasser bei einer Temperatur zwischen 20°C und der Rückfluß-Temperatur des Mediums ist, wonach der Katalysator durch Filtration oder Zusatz eines Nichtlösungsmittels und nachfolgende Filtration erhalten wird.

8. Verfahren nach Anspruch 7, dadurch gekennzeichnet, daß weiteres Triphenylphosphin in dem Verfahren der katalytischen Hydrierung zugesetzt wird.

9. Verfahren nach Anspruch 7, dadurch gekennzeichnet, daß für jeweils 1 mol Rhodium zwischen 1 und 2,5 mol Triphenylphosphin in der Reaktion zwischen dem Rhodium-Salz, dem Hydrazin und dem Triphenylphosphin eingesetzt werden.

10. Verfahren nach Ansprüchen 1 oder 2, dadurch gekennzeichnet, daß der Katalysator das Produkt der zwischen 1 h und 5 h dauernden Reaktion zwischen einem Rhodium-Salz und einem Hydrazin der Formel $R_1'R_2'N.NR_3'R_4'$, in der $R_1'$, $R_2'$, $R_3'$ und $R_4'$ die in Anspruch 3 angegebenen Bedeutungen haben, in Abwesenheit von Triphenylphosphin in einer Mischung aus einem organischen Lösungsmittel, das in der Reaktion inert ist, und Wasser bei einer Temperatur zwischen 20°C und der Rückfluß-Temperatur des Mediums ist, wonach der Katalysator durch Filtration oder Zusatz eines Nichtlösungsmittels und nachfolgende Filtration erhalten wird, und daß die homogene katalytische Hydrierung in Gegenwart von Triphenylphosphin durchgeführt wird.

11. Verfahren nach Ansprüchen 7, 8 oder 10, dadurch gekennzeichnet, daß das Rhodium-Salz Rhodiumtrichlorid in Form des Trihydrats ist.

12. Verfahren nach Ansprüchen 7, 8 oder 10, dadurch gekennzeichnet, daß das Hydrazin Hydrazin selbst, Phenylhydrazin, Benzolsulfonylhydrazin, N,N-Dimethylhydrazin, N,N'-Dimethylhydrazin oder Tetramethylhydrazin oder ein Salz einer dieser Verbindungen ist.

13. Verfahren nach Ansprüchen 7, 8 oder 10, dadurch gekennzeichnet, daß das Hydrazin in der Reaktion in stöchiometrischem Überschuß vorhanden ist.

14. Verfahren nach Ansprüchen 7 oder 10, dadurch gekennzeichnet, daß das organische Lösungsmittel ein niederes Dialkylketon wie Aceton, Butan-2-on, ein niederer Alkohol wie Methanol, Ethanol, Propanol,

Propan-2-ol, Butanol, 2-Methylpropan-2-ol, ein Ether wie Tetrahydrofuran, Dioxan, ein organisches Nitril wie Acetonitril oder ein niederes Dialkylamid wie Dimethylformamid ist.

**Revendications**

1. Procédé de préparation d'une α-6-désoxytétracycline à partir d'un sel d'addition d'acide d'une 6-désoxy-6-démethyl-6-méthylènetétracycline ou d'une 11a-chloro- 6-désoxy-6-déméthyl-6-méthylène-tétracycline ou d'un sel de celle-ci, par hydrogénation catalytique homogène en présence de triphénylphosphine, dont au moins une partie peut faire partie du catalyseur, 1'α-6-désoxytétracycline étant ensuite isolée du mélange de réaction, de préférence sous la forme de p-toluènesulfonate cristallin, caractérisé en ce que le catalyseur est le produit de réaction entre un sel ou complexe de rhodium et une hydrazine ou un sel de celle-ci.

2. Procédé suivant la revendication 1, caractérisé en ce que pour chaque partie de substrat à hydrogéner, la quantité de rhodium métallique dans le catalyseur nécessaire à la réalisation de l'hydrogénation est inférieure à 0,0007 partie en poids du substrat à hydrogéner.

3. Procédé suivant l'une ou l'autre des revendications 1 et 2, caractérisé en ce que le complexe précité est constitué de rhodium et de triphénylphosphine, et en ce que l'hydrazine répond à la formule $R'_1R'_2N.NR'_3R'_4$, dans laquelle $R'_1$ représente un groupe alkyle inférieur, phényle ou benzènesulfonyle ou l'hydrogène et $R'_2$, $R'_3$ et $R'_4$ représentent des groupes alkyle inférieurs ou l'hydrogène, à la condition que, lorsque $R'_1$ représente un groupe phényle ou benzènesulfonyle, $R'_2$, $R'_3$ et $R'_4$ ne puissent représenter que de l'hydrogène, et en ce que la réaction du complexe avec l'hydrazine ou un sel de celle-ci est effectuée en la présence ou l'absence d'un excès de triphénylphosphine dans un solvant organique à une température se situant entre 0°C et la température de reflux du milieu jusqu'à ce que la réaction s'achève, ledit catalyseur étant ensuite isolé par l'addition d'un non-solvant miscible, suivie d'une filtration.

4. Procédé suivant la revendication 3, caractérisé en ce que le complexe que l'on fait réagir avec l'hydrazine est le tris(triphénylphosphine)chlorohodium (I).

5. Procédé suivant la revendication 3, caractérisé en ce que l'hydrazine est l'hydrazine proprement dite, de préférence sous la forme du monohydrate.

6. Procédé suivant l'une quelconque des revendications 3, 4 et 5, caractérisé en ce que le solvant organique est un alcool inférieur, tel que le méthanol, l'éthanol, le propanol, le propan-2-ol, le butanol, le 2-méthylpropan-2-ol, ou un éther cyclique, tel que le tétrahydrofuranne.

7. Procédé suivant l'une ou l'autre des revendications 1 et 2, caractérisé en ce que le catalyseur est le produit de la réaction entre un sel de rhodium et une hydrazine ou un sel de celle-ci, répondant à la formule $R'_1R'_2N.NR'_3R'_4$, dans laquelle $R'_1$, $R'_2$, $R'_3$ et $R'_4$ sont tels que définis dans la revendication 3, en présence de triphénylphosphine, dans un mélange d'un solvant organique, qui est inerte vis-à-vis de la réaction, et d'eau, à une température se situant entre 20°C et la température de reflux du milieu pendant une période de temps se situant entre 1 et 5 heures, le catalyseur étant ensuite obtenu par filtration, ou addition d'un non-solvant, suivie d'une filtration.

8. Procédé suivant la revendication 7, caractérisé en ce que l'on ajoute une quantité supplémentaire de triphénylphosphine au procédé d'hydrogénation catalytique.

9. Procédé suivant la revendication 7, caractérisé en ce que pour chaque mole de rhodium, on utilise entre 1 et 2,5 moles de triphénylphosphine dans la réaction entre le sel de rhodium, l'hydrazine et la triphénylphosphine.

10. Procédé suivant l'une ou l'autre des revendications 1 et 2, caractérisé en ce que le catalyseur est le produit de réaction entre un sel de rhodium et une hydrazine de la formule $R'_1R'_2N.NR'_3R'_4$, dans laquelle $R'_1$, $R'_2$, $R'_3$ et $R'_4$ sont tels que définis dans la revendication 3, en l'absence de triphénylphosphine, dans un mélange d'un solvant organique, qui est inerte vis-à-vis de la réaction, et d'eau, à une température se situant entre 20°C et la température de reflux du milieu pendant une période de temps se situant entre 1 et 5 heures, ledit catalyseur étant ensuite obtenu par filtration, ou par addition d'un non-solvant, suivie d'une filtration, et en ce que l'on effectue l'hydrogènation catalytique homogène en présence de triphénylphosphine.

11. Procédé suivant l'une quelconque des revendications 7, 8 et 10, caractérisé en ce que le sel de rhodium est du trichlorure de rhodium, sous la forme du trihydrate.

12. Procédé suivant l'une quelconque des revendications 7, 8 et 10, caractérisé en ce que l'hydrazine est l'hydrazine proprement dite, la phénylhydrazine, la benzènesulfonylhydrazine, la N,N-diméthyl-hydrazine, la N,N'-diméthylhydrazine ou la tetraméthylhydrazine, ou un de leurs sels.

13. Procédé suivant l'une quelconque des revendications 7, 8 et 10, caractérisé en ce que l'hydrazine est présente dans la réaction en un excès stoechiométrique.

14. Procédé suivant l'une ou l'autre des revendications 7 et 10, caractérisé en ce que le solvant organique est une dialkyl cétone inférieure, telle que l'acétone, la butan-2-one, un alcool inférieur, tel que le méthanol, l'éthanol, le propanol, le propan-2-ol, le butanol, le 2-méthylpropan-2-ol, un éther, tel que le tétrahydrofuranne, le dioxane, un nitrile organique, tel que l'acétonitrile ou un dialkyl amide inférieur, tel que le diméthylformamide.